(19) Europäisches Patentamt

European Patent Office

Office européen des brevets

(11) **EP 1 216 745 A2**

(12) **EUROPÄISCHE PATENTANMELDUNG**

(43) Veröffentlichungstag:
26.06.2002 Patentblatt 2002/26

(51) Int Cl.[7]: **B01D 53/94**, B01J 27/055

(21) Anmeldenummer: 01129370.1

(22) Anmeldetag: 17.12.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **19.12.2000 DE 10063220**

(71) Anmelder: **BASF AKTIENGESELLSCHAFT
67056 Ludwigshafen (DE)**

(72) Erfinder:
• **Bender, Michael
67063 Ludwigshafen (DE)**
• **Hesse, Michael
67549 Worms (DE)**

(74) Vertreter: **Isenbruck, Günter, Dr.
Patent- und Rechtsanwälte,
Bardehle-Pagenberg-Dost-Altenburg-Geissler-Isenbruck
Theodor-Heuss-Anlage 12
68165 Mannheim (DE)**

(54) **NOx-Speicher-Katalysator, Verfahren zu seiner Herstellung sowie seine Verwendung**

(57) Die vorliegende Erfindung beschreibt einen Stickoxid-Speicherkatalysator in Wabenform, wobei die Wabe aus mindestens einem Erdalkalimetallsulfat als Vorläuferverbindung des Speichermaterials, gegebenenfalls in Kombination mit den üblichen Begleit- Hilfsstoffen und/oder gegebenenfalls mindestens einem Stabilisator, geformt ist.

Ebenfalls beschrieben ist ein Verfahren zur Herstellung eines solchen Katalysators. Der Katalysator eignet sich zur Entgiftung der Abgase von Magermotoren.

EP 1 216 745 A2

**Beschreibung**

Die vorliegende Erfindung betrifft einen sogenannten Stickoxid-Speicherkatalysator, der für die Entfernung von $NO_x$-Verbindungen aus mageren Abgasen eingesetzt wird. Der Katalysator weist einen Wabenkörper auf und enthält ein Erdalkalimetallsulfat als Vorläufersubstanz des Speichermaterials, wobei das Sulfat in den Wabenkörper selbst eingearbeitet ist bzw. als Material für diesen dient.

Stickoxid-Speicherkatalysatoren sind an sich bekannt und werden für die Abgasreinigung von sogenannten Magermotoren (Benzinmotoren) und Dieselmotoren verwendet. Derartige Motoren werden mit einem Luft/Kraftstoff-Gemisch betrieben, bei dem der Sauerstoffgehalt wesentlich größer ist als für die vollständige Verbrennung des Kraftstoffs notwendig. So ergibt sich ein Sauerstoffüberschuß im Abgas dieser Motoren. Die bekannten 3-Weg-Katalysatoren benötigen für die gleichzeitige Umsetzung der im Abgas vorhandenen Schadstoffe Kohlenwasserstoffe (HC), Kohlenmonoxid und Stickoxide ($NO_x$) ein stöchiometrisch zusammengesetztes Abgas und eignen sich daher nicht für die Entgiftung der Abgase von Magermotoren.

Kohlenmonoxid und Kohlenwasserstoffe lassen sich im Gegensatz zu den Stickoxiden leicht mit Hilfe der üblichen Abgaskatalysatoren durch Oxidation aus den Abgasen entfernen. Zum Entfernen der Stickoxide benutzt man die erwähnten Stickoxid-Speicherkatalysatoren. Diese enthalten Metallsalze, die mit den Stickoxiden zu Nitraten reagieren oder diese auch nur physikalisch absorbieren. Beispiele für Stickoxide sind $NO$, $NO_2$, $NO_3$, $N_2O_3$, $N_2O_4$ und $N_2O_5$, wobei Abgase von Verbrennungsmotoren hauptsächlich $NO$ enthalten. $NO$ wird jedoch, um mit den Speicherverbindungen reagieren zu können, zu $NO_2$ oxidiert. Zum Zwecke der NO-Oxidation in Mager- und der Speicherregeneration in Fettfahrweise enthalten die Speicherkatalysatoren üblicherweise redoxaktive Dotierungen von Metallen, vorzugsweise von Platinmetallen.

Nach einer gewissen Betriebszeit muß das Speichermaterial regeneriert werden, da durch die Belegung mit Stickoxid bzw. die Reaktion damit die Kapazität des Materials erschöpft ist. Dazu wird das Luft/Kraftstoffgemisch angefettet, also der Luftgehalt relativ zur Menge des Kraftstoffes erniedrigt. Dadurch verarmt auch das Abgas an Sauerstoff, und die gebildeten Nitrate werden zunächst wieder zu Stickoxiden zersetzt, die dann von der im Abgas herrschenden reduzierenden Atmosphäre zu elementarem Stickstoff reduziert werden.

Die Katalysatoren liegen im allgemeinen in Form von Wabenkörpern vor, die eine Anzahl von im wesentlichen zueinander parellelen Kanälen aufweisen, durch die das zu behandelnde Gas strömt. Derartige Wabenkörper können beispielsweise in der Querschnittansicht Honigwaben entsprechen. Die einzelnen Kanäle können auch einen runden oder rechteckigen, insbesondere quadratischen Querschnitt aufweisen, so daß der Querschnitt durch den Wabenkörper einer rechtwinkligen Gitterstruktur entspricht.

Nach dem Stand der Technik werden die Stickoxid-Speicherkatalysatoren durch Aufbringen einer Schicht des Speichermaterials auf dem aus einem Trägermaterial bestehenden Wabenkörper angebracht, wobei das Speichermaterial oft in hochdisperser Form auf das Trägermaterial aufgebracht wird. Hier taucht häufig das Problem auf, daß die Speicherverbindung, insbesondere bei hohen Temperaturen, mit dem Trägermaterial reagiert, wodurch ein Aktivitätsverlust resultiert. Um dieses Problem zu umgehen, werden in der Literatur verschiedene Lösungen vorgeschlagen, siehe dazu beispielsweise die in EP-A 993 860 zitierte Literatur.

In der EP-A 993 860 wird auch ein Stickoxid-Speicherkatalysator offenbart, der als Speichermaterial nicht die ansonsten üblichen Oxide oder Acetate von Erdalkalimetallen, sondern die Sulfate dieser Metalle, insbesondere von Strontium oder Barium, als Vorgängerverbindung des aktiven Speichermaterials enthält. Diese Sulfate müssen nach dem Aufbringen auf das Trägermaterial noch einer Aktivierung unterworfen werden. Dazu werden sie mit einem stöchiometrischen oder fetten Abgas bei Temperaturen von >550 °C in Kontakt gebracht, wobei unter Freisetzung von $SO_2$ die aktive Komponente entsteht. Dadurch kann eine hohe Menge an Speicherkomponenten in den Katalysator eingebracht werden.

Das Aufbringen dieser Sulfate auf den Träger geschieht auf eine an sich bekannte Weise, indem zunächst eine Dispersion hergestellt wird, die das Sulfat neben gegebenenfalls den üblichen Hilfsstoffen und Bindemitteln enthält. Der Wabenkörper wird dann durch Eintauchen in die Dispersion, Trocknen und Calcinieren mit dem Speichermaterial bzw. deren Vorläuferverbindung beschichtet. Die Desulfatierung der Vorläuferverbindung der Speicherkomponente kann bereits zumindest teilweise dabei durch Anwenden einer reduzierenden, vorteilhafterweise ein Gemisch aus $H_2$ und $CO$ enthaltenden Atmosphäre bei hohen Temperaturen vorgenommen werden; diese Desulfatierung kann aber auch später, vor dem Einsatz als Abgaskatalysator, durchgeführt werden.

Wenngleich der vorstehend beschriebene Stickoxid-Speicherkatalysator für einige Anwendungen eine ausreichend hohe Speicherkapazität aufweist, ist diese dennoch weiterhin verbesserungsbedürftig. Zudem sind durch das Aufbringen der Vorläuferverbindung des Speichermaterials in Form einer dünnen Schicht die mechanische Haltbarkeit sowie die Betriebssicherheit häufig niedriger als gewünscht. Zusätzlich verursacht die Herstellung nach dem Stand der Technik einen hohen Fertigungsaufwand.

Die Aufgabe der vorliegenden Erfindung besteht darin, einen Stickoxid-Speicherkatalysator bereitzustellen, der verglichen mit dem im Stand der Technik bekannten Speicherkatalysatoren eine hohe Speicherkapazität sowie eine hohe Haltbarkeit und Abriebfestigkeit aufweist und einfach herzustellen ist.

Diese Aufgabe wird gelöst durch einen Stickoxid-Speicherkatalysator in Wabenform, wobei die Wabe aus mindestens einem Erdalkalimetallsulfat als Vorläuferverbindung des Speichermaterials, gegebenenfalls in Kombination mit den üblichen Begleit- und Hilfsstoffen und/oder gegebenenfalls mindestens einem Stabilisator, geformt ist.

Üblicherweise enthält der erfindungsgemäße Katalysator weiterhin eine Aktivkomponente, üblicherweise ein Übergangsmetall, vorzugsweise ein Metall aus der Gruppe bestehend aus Palladium, Platin, Rhodium, Iridium und Ruthenium. In der aktivierten Form ist zumindest ein Teil der als Vorläuferverbindung dienenden Sulfate in ein aktives Speichermaterial, generell das entsprechende Oxid, Carbonat oder Nitrat bzw. Nitrit überführt.

Im Unterschied zu den Stickoxid-Speicherkatalysatoren nach EP-A 993 860 wird die Vorläuferverbindung des Speichermaterials nicht auf den Wabenkörper aufgetragen, sondern der Wabenkörper ist aus der Vorläuferverbindung des Speichermaterials bzw., in der aktivierten Form, dem Speichermaterial selbst zumindest teilweise aufgebaut. Um eine ausreichende Festigkeit zu erhalten, ist es bevorzugt, der Vorläuferverbindung des Speichermaterials vor dem Verbringen in einen Wabenkörper einen Stabilisator zuzugeben, der eine ausreichende Stabilität gewährleistet. Diese Stabilität ist bei den üblicherweise verwendeten Speichermaterial-Vorläuferverbindungen in den meisten Fällen nicht ohne einen Stabilisator zu erreichen. Als Stabilisator eignen sich anorganische Systeme wie Aluminiumoxide und -hydroxide, Siliciumdioxid, Zirkonoxid oder Titandioxid oder Titansäuren, Steatit und Cordierit sowie Tone oder Schichtsilikate.

Weitere Hilfsmittel, die gegebenenfalls in dem Trägermaterial anwesend sein können, sind beispielsweise solche, die die Verstrangbarkeit der Masse verbessern, und/oder Porenbildner. Der Zusatz von Porenbildnern ist bevorzugt, da so die durch den während der Extrusion zu einem Wabenkörper stattfindenden Kompaktierungsprozeß verschlossenen Poren wieder geöffnet werden. Dadurch wird das Innere der Wabenwand für die Abgaskomponenten diffusiv zugänglich.

Beispiele für die Verstrangbarkeit verbessernde Hilfsmittel sind Zusatzstoffe, die rheologieverändernd auf die Extrusionsmasse einwirken. Diese können organische Zusätze, wie beispielsweise Carboxy- oder Hydroxymethylcellulosen, Stärke, Alginate, Polyethylenoxide, Polyvinylalkohole unterschiedlicher Molmasse sowie andere, dem Fachmann bekannte Polymere sein. Es können auch anorganische Hilfsstoffe, z.B. Tone und Schichtsilikate eingesetzt werden.

Die vorstehend erwähnten organischen Zusätze wirken bei einer nachgeschalteten Temperung des Formkörpers naturgemäß auch porenbildend. Weitere geeignete Porenbildner sind z.B. Kohlenhydrate wie Zucker oder Sorbite, Mehle, Graphit, Ruß, Kohlefasern sowie flüssige, abbrennbare Organika.

Die Vorläuferverbindungen der Stickoxid-Speichermaterialien, die zur Herstellung des Wabenkörpers nach der vorliegenden Erfindung verwendet werden, entsprechen den an sich bekannten Vorläuferverbindungen. Dies sind die Sulfate der Erdalkalimetalle, wobei der Einsatz von Strontiumsulfat und Bariumsulfat bevorzugt wird. Insbesondere wird Bariumsulfat eingesetzt.

Die Vorläuferverbindung des Speichermaterials wird zur Herstellung des Wabenkörpers mit den gegebenenfalls vorhandenen Stabilisatoren und/oder Hilfsstoffen vermischt und in eine homogene Masse gebracht, vorzugsweise durch Kneten. Der Wabenkörper wird dann aus dieser Masse durch Extrusion auf an sich bekannte Weise hergestellt, beispielsweise auf die Art, die in der EP-A 945 177 (Anmelderin: BASF AG) offenbart wird.

Im Anschluß an die Extrusion wird der erhaltene Rohwabenkörper, der sogenannte Grünling, getrocknet und calciniert. Nach erfolgter Calcinierung wird die Aktivkomponente, also die eingesetzte Katalysatorspezies, auf den Wabenkörper aufgebracht. Als Katalysatorspezies eignen sich die üblichen, an sich bekannten Übergangsmetalle, insbesondere Palladium, Platin, Rhodium, Iridium und/oder Ruthenium. Es können jedoch auch andere Übergangsmetalle, wie z.B. Cu, Ni, Fe etc. aufgetragen werden. Das Aufbringen wird mit den einem Fachmann bekannten Verfahren durchgeführt. Beispielsweise kann der Wabenkörper mehrfach in die betreffende Salzlösung getaucht und zwischen den einzelnen Tauchvorgängen getrocknet werden. Möglich ist auch das Aufbringen eines Sols der Aktivkomponente oder/-komponenten, wobei das Aufbringen des vorzugsweise stabilisierten Sols durch Tauchen, Besprühen oder Pinsel- bzw. Schwammauftrag erfolgen kann.

Der so erhaltene Katalysator-Wabenkörper muß zur Ausbildung der Stickoxid-Speicherkapazität aktiviert werden. Diese Aktivierung kann nach dem Einbau in ein Kraftfahrzeug oder davor geschehen, wobei die Aktivierung vor dem Einbau bevorzugt wird. Die Aktivierung erfolgt durch den Kontakt des Katalysators mit einem sauerstofffreien Gas, das vorzugsweise Kohlenwasserstoffe, Wasserstoff, Kohlenmonoxid oder ein Gemisch aus mindestens zwei dieser Komponenten enthält. Der Aktivierungsschritt wird bei Temperaturen von >400 °C, vorzugsweise >470 °C, insbesondere >550 °C durchgeführt. Bei der Aktivierung wird das oder die als Vorläuferverbindung vorhandenen Sulfate unter Freisetzung von Schwefeldioxid in eine speicheraktive Form überführt.

Alternativ ist es auch möglich, die Wabe mit der nicht aktivierten Vorläuferverbindung der aktiven Speicherspezies in ein Kraftfahrzeug einzubauen und die Aktivierung durch Kontakt mit den Abgasen des Motors durchzuführen. Hierzu muß der Motor in einem Betriebsparameter-Fenster betrieben werden, bei dem das Abgas die entsprechenden, zur Aktivierung notwendigen Komponenten enthält.

Ein erfindungsgemäßer Stickoxid-Speicherkatalysator weist eine Menge von Vorteilen gegenüber den bisher bekannten Speicherkatalysatoren auf. So ist wegen der großen Menge an speicheraktiven Verbindungen in der Wabenwand die Stickoxid-Speicherkapazität höher als bei den bisher bekannten Katalysatoren. Erfindungsgemäße Katalysatoren sind einfacher und vor allem in weniger Arbeitsschritten herzustellen als die bisher bekannten, die Betriebssicherheit und- dauer sind aufgrund der erhöhten mechanischen Haltbarkeit verbessert. Aufgrund des verringerten Abriebs wird zudem die Umweltbelastung vermindert. Insbesondere ist der Katalysator nach der vorliegenden Erfindung auch einfacher herzustellen als die bisher bekannten Katalysatoren, weil aufgrund der höheren Speichermaterial-Menge die Speichermaterial-Partikel bei der Herstellung nicht mehr in äußerst feinteiliger Form von < 1μm vorliegen müssen.

Die erfindungsgemäßen Speicherkatalysatoren eignen sich zur Entgiftung der Abgase von Dieselmotoren und Benzin-Magermotoren.

Die Erfindung wird nun in den nachfolgenden Beispielen näher erläutert.

**Beispiel 1:**

**Herstellung einer Bariumsulfat-haltigen Volltextrudat-Wabe**

Ein erfindungsgemäßer Katalysator wird hergestellt durch Mischen und Verkneten von 827g Pseudoböhmit (AlOOH) mit 9000g $BaSO_4$. Zu der Mischung werden je 104g Hydroxymethylcellulose und Polyethylenoxid (Molgewicht ungefähr 2000) sowie 400g Ameisensäure (50% wässrige Lösung) und 1000g Wasser gegeben. Die Mischung wird dann 4h lang geknetet. Danach wird der so hergestellte Teig zu Wabenkörpern mit einem Querschnitt von ca. 50 x 50 mm extrudiert. Dabei werden Matrizenmundstücke mit 6 x 6, 13 x 13, 40 x 40 und 60 x 60 Zellen über den oben genannten Querschnitt verwendet.

Die Wabenkörper werden geschnitten, in Folie gehüllt und an der Luft getrocknet. Nachdem so eine Gewichtsabnahme von 8% erreicht wurde, wurde die Trocknung ohne Folie in einem Umlufttrockenschrank bei langsam gesteigerter Temperatur (30 - 60°C) fortgesetzt. Die Wabenkörper wurden dann 2 h bei 500°C getempert.

Die fertigen Waben weisen eine BET-Oberfläche von 30 $m^2$/g und eine Porosität (bestimmt durch Hg-Porosimetrie) von 0.112 ml/g auf. Sie bestehen zu 90 Massen-% aus $BaSO_4$.

Die fertigen Waben werden anschließend durch Soltränkung bzw. durch Tauchung mit einer Platinsalzlösung mit Platin dotiert. Beide Wabenkörper werden anschließend 1h bei 650°C im $H_2$-Strom getempert.

**Beispiel 2:**

**Herstellung einer Bariumsulfat-haltigen Volltextrudat-Wabe**

Ein Bariumsulfat-haltiger Wabenkörper wird hergestellt durch Vermischen von 6000g $BaSO_4$, 3612g Cordierit und 1414g AlOOH, jeweils in Pulverform. Aus den vermischten Pulvern wird unter Zugabe von Wasser, Ameisensäure und üblichen rheologischen Additiven wie Zellulosederivaten, Wachsen oder Alkoxiden durch Verknetung ein extrudierbarer Teig hergestellt. Die Knetdauer liegt bei ca. 1 Stunde. Der so hergestellte Teig wird zu Wabenkörpern der gewünschten Zelligkeit extrudiert, getrocknet und 2 Stunden bei 800 °C getempert.
Die so hergestellten Wabenkörper besitzen eine BET Oberfläche von 24 $m^2$/g und eine Porosität (ermittelt mit Hg-Porosimetrie) von 0,14 ml/g.

**Beispiel 3:**

**Herstellung eines Dünnschicht-Speicherkatalysators**

Der in Beispiel 2 hergestellte Wabenkörper muß, um speicherkatalytisch wirksam sein zu können, mit Edelmetall beladen werden. Dies geschieht durch Tränkung mit kolloidalem Edelmetall aus wässriger Lösung. Der Wabenkörper wurde in ein passendes Stück mit quadratischer Stirnfläche der Größe 25 x 25 mm sowie einer Länge von 110 mm zurechtgesägt, (Gewicht = 88g). Dieses Stück wurde mit einem ethanolisch-wässrigen Platin-Sol getränkt. Das 3 %ige Platin-Sol wurde nach einer in EP-A 0 920 912 beschriebenen Vorgehensweise hergestellt. 200 ml des Sols wurden in einem 500 ml-Meßzylinder vorgelegt und der Träger axial aufrecht hineingestellt, so dass alle Kanäle des Wabenkörpers benetzt wurden. Nach einer Verweilzeit von 1 Stunde wurde der Wabenkörper aus dem Sol herausgezogen, abtropfen gelassen und mit Zellstoff abgetupft. Aus der kapillaren Flüssigkeitsaufnahme (12,2 ml) wurde eine Pt-Belegung des Trägers mit 0,042 % Pt errechnet.

Der auf diese Weise erhaltene Katalysator-Precursor wird bei 120 °C 2 Stunden lang getrocknet. Die reduktive Aktivierung durch Umsetzung des Bariumsulfats mit Wasserstoff erfolgte durch Kalzination in einem $H_2$-Gasstrom (ca.

10 l/h) für 2 Stunden bei 600 °C in einem Ofen. Bei dieser Kalzination entsteht $H_2S$ gemäß dem Schema:

$$BaSO_4 + 4H_2 \rightarrow Ba(OH)_2 + H_2S + 2H_2O \rightarrow BaO + H_2S + 3H_2O$$

Auf diese Weise wird ein Teil des Bariumsulfats in die speicheraktive, teils oxidische, teils hydroxidische Form überführt.

**Beispiel 4:**

**Herstellung eines Voll-Speicherkatalysators**

Die Einbringung der Edelmetallphase geschieht hierbei durch Tränkung des unter 1 hergestellten Wabenkörpers mit einer Platinsalz-Lösung. Zu diesem Zweck wurde ein weiteres, wie in Beispiel 3 beschriebenes Probestück des Bariumsulfat-Wabenkörpers vorbereitet. Die Wasseraufnahmekapazität dieses Wabenkörpers wurde durch einstündige Tränkung in Wasser und Abtropfung sowie Tupfung mit Zellstoff zu 11,4g bestimmt. Für die folgende Pt-Salztränkung wurde die Pt-Salzkonzentration so berechnet, dass insgesamt ein Pt-Gehalt des Katalysators von 10 mmol/l erreichbar ist. Es wurden 50g wässrige $H_2PtCl_6$-Lösung mit 5 % Pt-Gehalt mit destilliertem Wasser auf 207g aufgefüllt. Die Lösung wurde im Meßzylinder vorgelegt, der Träger hineingestellt und 1 Stunde lang verweilen gelassen. In dieser Zeit betrug die Aufnahme des Trägers an Pt-Salzlösung 11.6 g (0,2g mehr als theoretisch vorausberechnet). Die dadurch erzielte Belegung betrug 0,162 % Pt, was einer Pt-Konzentration von 10,41 mmol/l (Träger) entspricht. Auch dieses Stück wurde auf die in Beispiel 3 beschriebene Weise mit Wasserstoff reduziert.

**Patentansprüche**

1.  Stickoxid-Speicherkatalysator in Wabenform, wobei die Wabe aus mindestens einem Erdalkalimetallsulfat als Vorläuferverbindung des Speichermaterials, gegebenenfalls in Kombination mit den üblichen Begleit- und Hilfsstoffen und/oder gegebenenfalls mindestens einem Stabilisator, geformt ist.

2.  Katalysator nach Anspruch 1, **dadurch gekennzeichnet, daß** das Sulfat Strontiumsulfat und/oder Bariumsulfat, vorzugsweise Bariumsulfat, ist.

3.  Katalysator nach Anspruch 1 oder 2, **dadurch gekennzeichnet, daß** dieser weiterhin eine Aktivkomponente aus einem Übergangsmetall, vorzugsweise aus der Gruppe bestehend aus Platin, Rhodium, Iridium und/oder Ruthenium, enthält.

4.  Katalysator nach einem der Ansprüche 1 bis 3, **dadurch gekennzeichnet, daß** die Vorläuferverbindung teilweise oder ganz in das aktive Speichermaterial, vorzugsweise ein Oxid, Carbonat, Nitrat oder Nitrit überführt wurde.

5.  Katalysator nach einem der Ansprüche 1 bis 4, **dadurch gekennzeichnet, daß** der Stabilisator ausgewählt ist aus der Gruppe bestehend aus Aluminiumoxiden und - hydroxiden, Siliciumdioxid, Zirkonoxid, Titandioxid, Titansäuren, Steatit, Cordierit, Tonen und Schichtsilikaten.

6.  Verfahren zur Herstellung eines Katalysators nach einem der Ansprüche 1 bis 5, **dadurch gekennzeichnet, daß** die Vorläuferverbindung des Speichermaterials sowie die gegebenenfalls vorhandenen Hilfs- und Begleitstoffe und/oder der Stabilisator in eine homogene Form gebracht werden, vorzugsweise durch Kneten, und die so erhaltene Masse durch Extrudieren zu einem Wabenkörper geformt wird, auf den gegebenenfalls die Aktivkomponente aufgebracht wird und die Vorläuferverbindung gegebenenfalls durch Aktivieren in das aktive Speichermaterial überführt wird.

7.  Verfahren nach Anspruch 6, **dadurch gekennzeichnet, daß** ein die Verstrangbarkeit verbesserndes organisches oder anorganisches Hilfsmittel, vorzugsweise aus der Gruppe bestehend aus Carboxymethylcellulosen, Hydroxymethylcellulosen, Stärke, Alginaten, Polyethylenoxiden und Polyvinylalkoholen unterschiedlicher Molmasse, Tonen und Schichtsilikaten zugegeben wird.

8.  Verfahren nach Anspruch 6 oder 7, **dadurch gekennzeichnet, daß** ein Porenbildner zugegeben wird, vorzugsweise ein Porenbildner aus der Gruppe bestehend aus Carboxymethylcellulosen, Hydroxymethylcellulosen, Stärke, Alginaten, Polyethylenoxiden und Polyvinylalkoholen unterschiedlicher Molmasse, Tonen und Schichtsilikaten, Kohlenhydraten, insbesondere Zuckern und Sorbiten, Mehlen, Graphit, Ruß, Kohlefasern sowie flüssigen, abtrennbaren Organika.

9. Verfahren nach einem der Ansprüche 6 bis 8, **dadurch gekennzeichnet, daß** die Aktivkomponente durch Eintauchen in eine Salzlösung des entsprechenden Metalls oder ein Aufbringen eines Sols der Aktivkomponente, vorzugsweise durch Tauchen, Sprühen, Pinsel- oder Schwammauftrag, aufgebracht wird.

10. Verfahren nach einem der Ansprüche 6 bis 9, **dadurch gekennzeichnet, daß** die Aktivierung durch Kontakt mit einem sauerstofffreien Gas, das vorzugsweise Kohlenwasserstoffe, Wasserstoff, Kohlenmonoxid oder ein Gemisch aus mindestens 2 dieser Komponenten enthält, bei Temperaturen von > 400 °C, vorzugsweise > 470 °C, insbesondere > 550 °C, vor oder nach dem Einbau des Katalysators in ein Kraftfahrzeug erfolgt.

11. Verwendung eines Abgaskatalysators nach einem der Ansprüche 1 bis 5 zur Entgiftung der Abgase von Dieselmotoren oder Magerbenzinmotoren.